# EUROPEAN PATENT SPECIFICATION

(11) **EP 1 754 293 B1**
(45) Date of publication and mention of the grant of the patent: **26.09.2012**
(21) Application number: 05742550.6
(22) Date of filing: 03.05.2005
(51) Int. Cl.: H02G 7/12

(54) **SPACER DAMPER FOR ELECTRICAL CABLES**
ABSTANDS-DÄMPFUNGSGLIED FÜR ELEKTRISCHE KABEL
ENSEMBLE AMORTISSEUR-ECARTEUR DESTINE A DES CABLES ELECTRIQUES

(30) Priority: 30.04.2004 GB 0409734
(43) Date of publication of application: 21.02.2007
(73) Proprietor: Preformed Line Products (GB) Limited, Andover, Hants SP10 3LH (GB)
(72) Inventor: CARLEY, Stephen William, Romsey, Hampshire SO51 0NN (GB)
(74) Representative: South, Nicholas Geoffrey
(86) International application number: PCT/GB2005/001691
(87) International publication number: WO 2005/107032

(56) References cited:
- DE-A1- 10 017 421
- GB-A- 1 587 233
- GB-A- 2 286 727
- JP-A- 52 146 897
- US-A- 4 480 149

## Description

The present invention relates to spacer dampers of the type typically used for spacing bundled electrical conductors suspended from pylons.

A spacer damper typically comprises at least two clamps which grip respective bundles of conductors, mounted on a frame which separates the clamps. The frame may comprise a straight section or it may be triangular, rectangular, circular or polygonal, depending on the number of cable bundles to be separated. The clamps are mounted at the ends or corners of the frame or at predetermined locations on a circular section, and comprise an arm portion and a cable grip portion. The mounting of the clamps on the frame permits a limited amount of movement of the clamps with respect to the frame, and also provides a controlled electrically semiconductive path between the clamp arm and the frame, both of which are usually made of metal.

For the purpose of providing the semiconductor path and also to damp any movement of the clamp arm (or conductor arm) with respect to the frame, the arms of a spacer damper are usually attached to the frame via one or more elastomeric members.

The clamp arm is ordinarily made from an arm component, one end of which connects to the frame, and a keeper component, the arm and keeper being connected by a hinge arrangement located at the end of the clamp arm furthest from the frame. The arm and the keeper are arranged to define a hole through which the conductors pass, when in a closed position, and the keeper can be pivoted into an open position by means of the hinge in order to open the clamp arm to allow the clamp arm to be fitted around the conductors before being clamped shut.

Other arrangements for securing the clamp to the cable are by means of an "Armour Grip Arm", in which no keeper is provided, and helical rods are wrapped around the clamp arm and along the cable to secure it to the clamp, or a bolted cantilever-type clamp arm which utilises metal-to-metal contact and secures the cable by bolting a separate, unhinged keeper to the clamp arm.

The arm and keeper are typically produced by casting, using aluminium alloy or any other suitable material, and further machining is required to finish the components. This procedure is relatively labour intensive, and the cycle time for the casting process is typically several minutes. Once the components have been finished, the clamp arm must be assembled by aligning the components and inserting and securing a hinge pin, as well as inserting a moulded rubber clamp liner into the recessed portion of each component which forms the aperture through which the conductor passes when the arm is clamped into position.

GB 2286727 discloses a spacer damper arrangement in which the clamp arms are held in the frame by means of a plurality of cylindrical elastomeric spacer members, which damp the movement of the clamp arm relative to the frame. The elastomeric spacer members are arranged to be pre-compressed laterally, between cylindrical recesses in the frame and corresponding recessed surfaces in the end portion of the clamp arm, and axially between two clamping plates, in order to reduce wear.

It would be advantageous to provide a spacer damper which can be manufactured and assembled using a simpler and less labour intensive method, and also to further reduce the susceptibility of the damping members to wear.

It is an object of the present invention to overcome or reduce some or all of the problems mentioned above.

EP 1 322 015 discloses various hinge arrangements for use in what is generically known as a "Stockbridge" type damper. This is a damper used to damp motion known as Aeolian vibration in a single conductor, rather than a damper used to separate multiple conductors in a bundle. This kind of damper uses a wire messenger and a damping weight mechanism, typically made from zinc or cast iron. The damping mechanism is attached to the cable using a cable clamp, and the weights are thereby suspended from the cable. Extruded hinge arrangements are disclosed for use in the clamp of such a damper.

However, the "Stockbridge" type dampers are subject to different design considerations from elastomer damped spacer dampers intended to separate multiple bundled conductors. Stockbridge type dampers are used on conductors within a bundle, but do not hold the bundle in shape or prevent clashing of conductor. Hence spacer dampers are subject to different loadings and electrical stresses.

Spacer dampers or semi-flexible spacers using elastomer clamps are used to control or reduce to a safe level sub conductor oscillation and Aeolian vibration. These are required in service to achieve slip loads (pull along the conductor) in excess of 3kN, which has been found in testing to require in the region of an 8kN clamp load across the hinge to compress the elastomer effectively. Conventional "Stockbridge" type damper clamps are designed solely to control Aeolian vibration and have therefore been found not to be suitable for use in this application, since the extruded hinge arrangements have been found to fail at these loads. Furthermore, even with the reduced loading requirement, the hinge arrangements disclosed in EP 1 322 015 are only able to achieve around a 40 degree opening, which is insufficient for use in a spacer damper, where a larger opening is required for installation around multiple conductors.

In addition, the profile of such damper clamps is not designed to achieve the required corona discharge performance for use in a spacer damper which separates multiple conductors.

The present invention provides a clamp arm for use in spacer dampers for the separation of multiple transmission conductors, as defined in claim 1.

The clamp arm comprises an arm member and a keeper member, and preferably, the keeper member is attached to the arm member by hinge means, the hinge means being formed by portions of the arm member and keeper member having substantially uniform cross-sections, whereby to allow the hinge means to be formed by extrusion of the arm member and keeper member.

The design of the components to allow manufacture by extrusion leads to a reduction in cost, both in terms of materials and assembly, and provides a surface finish giving reduced wear, even without additional finishing after the manufacturing process.

Another aspect of the invention provides a spacer damper for the separation of multiple transmission conductors, comprising a frame to which are mounted a plurality of clamp arms as described above.

Embodiments of the invention will now be described, by way of example, with reference to the accompanying drawings, in which:
Figure 1 shows a clamp arm according to the present invention, in a closed position;
Figure 2 shows the clamp arm in an open position;
Figure 3 shows the arm member of the clamp arm;
Figure 4 shows the keeper member of the clamp arm;
Figure 5 shows the side elevation of an alternative embodiment of the clamp arm of the invention;
Figure 6 shows the side elevation of a further alternative embodiment of the clamp arm of the invention;
Figure 7 shows the side elevation of a still further alternative embodiment of the clamp arm of the invention;
Figure 8 illustrates (a) the side elevation and (b) the plan view of an "Armour Grip Arm" type assembly;
Figure 9 illustrates (a) the side elevation and (b) the plan view of a cantilever clamp arm assembly utilising two bolted components; and
Figures 10 to 16 show various alternative arrangements of extruded spacer damper frames suitable for use in a further aspect of the invention.

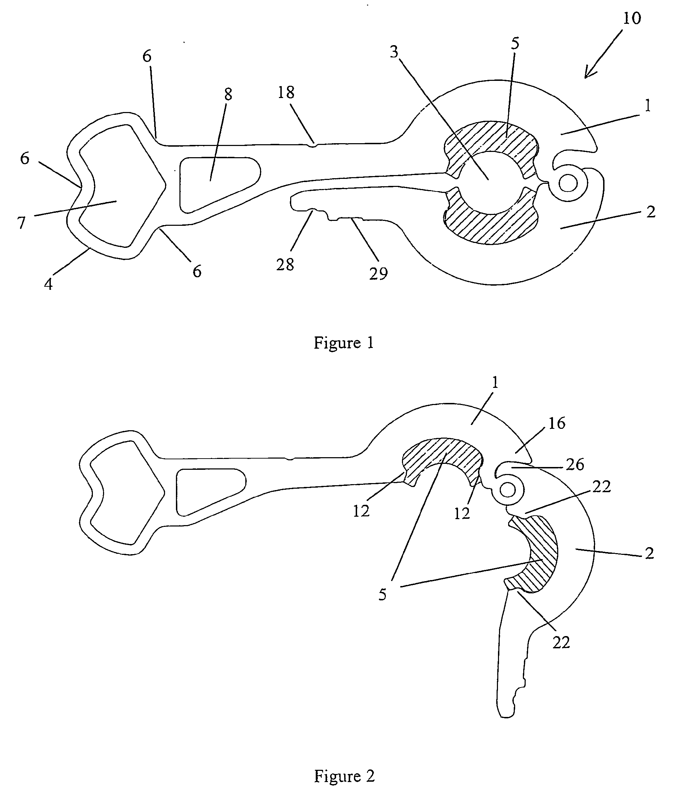

Referring to Figure 1, a clamp arm 10 is shown, which comprises an arm member 1 and a keeper member 2, connected by a hinge arrangement located at the end of the clamp arm furthest from the frame (not shown), when the clamp arm is attached to a frame. Attachment to the frame is typically achieved by locking an enlarged end portion 4 of the arm member into a recess in the frame, by means of insulating spacer members, which also act to damp movement of the clamp arm, as described in detail in GB 2286727. The enlarged end portion 4 shown in Figure 1 is suitable for attachment to a frame in the same manner as is disclosed in that document.

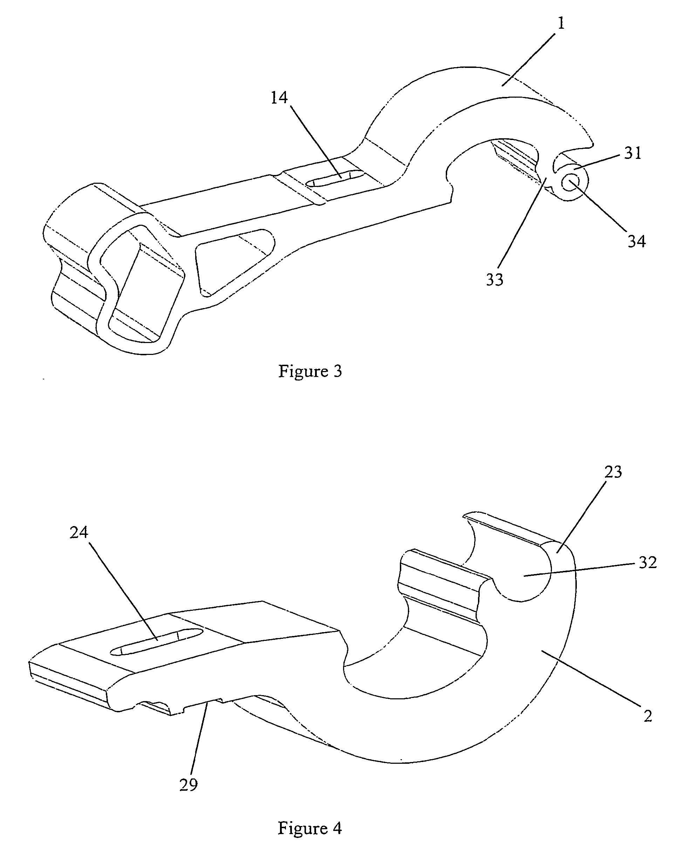

In the closed position shown in Figure 1, the clamp arm can be locked around a conductor, which passes through the aperture defined between the arm and the keeper. When positioned around a conductor in the closed position, the clamp arm may be secured by introducing a bolt, or other fastener, through corresponding slots 14, 24 (see Figures 3 and 4) in the arm and keeper respectively.

Figure 2 shows the clamp arm in an open position, in which it may be installed around a conductor, before being closed. It can be seen that this arrangement provides an opening of around 90 degrees, while retaining sufficient strength to withstand the required loading, which allows the clamp arm to be easily installed around the conductor.

In use, the clamp arm typically includes a pair of clamp liners 5 located in the aperture between the arm and the keeper. The clamp liners preferably comprise a pair of elastomeric inserts with an approximately semi-circular cross-section, which are respectively placed in the recessed portions (clamp recesses) of the arm and keeper which define the aperture. The outer surface of each insert is shaped to correspond to the inner surface of the recessed aperture portion of the arm and keeper, and an inner surface of each insert is shaped to correspond to the size and/or shape of the conductor to which the arm is intended to be clamped. In this way, when the clamp liners are positioned in the aperture, and the clamp arm is in the closed position, the clamp liner fills the aperture but defines a central bore 3 through which the conductor can pass. Since the clamp liner is typically made from an elastomeric material, it provides a degree of resilience, such that a controlled gripping pressure can be applied to the conductor by controlling the size of the bore relative to the diameter of the conductor.

In conventional clamp arms, the aperture between the arm and the keeper is circular when the clamp arm is in the closed position, and each of the pair of clamp liners therefore has a semi-circular cross-section. However, this can lead to difficulties in positioning the clamp liners in the aperture, since the clamp liners may be rotated with respect to the aperture.

In the present invention, the pair of clamp liners preferably comprises two identical extruded elastomeric inserts, which can be slid into the corresponding aperture portion of the arm and keeper. The inside aperture surfaces of the arm and keeper preferably have an identical cross-sectional shape, such that only a single type of insert needs to be produced, which can be fitted to either component. Furthermore, as shown in the drawings, the shape of the aperture portion of the arm and keeper is preferably not semi-circular, but includes at least one protrusion 12, 22 arranged to reduce the width of the aperture towards the interface between the arm and the keeper. By slightly reducing the width of the aperture in this way, the protrusions prevent the clamp liner, which preferably has a corresponding shape, from moving out of the aperture portion of either component, even when the clamp arm is in the open position. Once each of the pair of clamp liners has been slid into position in the aperture portion, it is therefore held in position by virtue of the shape of the aperture.

The aperture shape serves not only to lock the clamp liner in position, but also to permit only the correct alignment of the clamp liner within the aperture. It will be appreciated that other shapes than that illustrated may be used in order to achieve this effect. The corresponding cross-sectional shapes of the arm and keeper components and the clamp liners are particularly conveniently implemented by extruding all of these components. The clamp liner may be further secured using a small amount of adhesive, in particular to prevent lateral movement, but installation and alignment are nevertheless significantly simplified.

In accordance with the illustrated embodiment of the present invention, the arm and keeper of the clamp arm have been designed such that they can be formed by extrusion, with only minimal subsequent machining required to stamp out (or form by other means) the slots 14, 24 needed to accommodate the retaining means which are used to secure the clamp arm around the conductor.

In particular, the hinge which connects the arm and the keeper is designed to have a uniform cross-section, in order to allow the components to be extruded. This is achieved by providing the extremity of the arm component 1 with a cylindrical hinge portion 31, as can be seen most clearly in Figure 3. The hinge portion 31 is joined to the remainder of the arm by a narrowed neck portion 33 extending from one side of the hinge portion, such that a large part of the circumference of the cylindrical surface of the hinge portion is exposed.

As shown in Figure 4, the keeper 2 is provided with a recess 32 arranged to fit around the cylindrical hinge portion 31 of the arm 1. The cross-section of the recess 32 describes an incomplete circle corresponding to the diameter of the cylindrical hinge portion 31, but describes more than 180° of the circle, such that when the keeper is attached to the arm by sliding the hinge portion 31 of the arm laterally (i.e. along the axis of the cylinder) into the recess 32, the keeper is held against the arm, permitting relative rotation, and can only be removed laterally.

When the arm and keeper are engaged in this way, rotation of the keeper around the cylindrical hinge portion of the arm allows the clamp arm to be opened and closed. The limits of the relative movement of the keeper and arm are defined by the points at which the edges of the recess 32 in the keeper meet the sides of the neck portion 33 in the arm. The range of movement can therefore be defined by the shape of the recess 32, and the surrounding portion of the keeper in which it is formed, and the arrangement of the hinge portion 31 and neck portion 33. It will be appreciated that the portion of the keeper surrounding the recess 32 may be shaped to correspond to a portion of the arm surrounding the hinge portion 31. As can be seen in Figure 2, the end of the keeper may define a projection 26 which fits against a projection 16 defined in the end of the arm. In this way, the range of motion is limited in a way which spreads any load applied to the components in an opening direction. The range of motion can be similarly limited in the closing direction, or this motion can simply be limited by the contact of other parts of the arm and keeper, such as the main body areas in which the slots 14, 24 are located in the illustrated embodiment.

Once the recess 32 of the keeper has been located around the hinge portion 31 of the arm by sliding the two components together laterally, further lateral movement is prevented by fitting a retainer (not shown) into a bore 34 provided in the cylindrical hinge portion 31. Once fitted, a flanged head provided at each end of the retainer prevents lateral movement. The retainer may be any suitable form of retaining means for preventing relative lateral movement of the arm and keeper.

The end of the arm opposite to the hinge portion is shaped as an enlarged portion 4 which is secured in a recess in the frame, as described in GB 2286727. For this purpose, the end portion is shaped to include three recesses 6 in the surface, in which the insulating members are located when the arm is secured in the frame. Suitable shapes and positions for these recesses 6 are described in GB 2286727. It should be noted, however, that in the present invention, three individual insulating members are preferably used, which locate in the three recesses of the end portion of the clamp arm, rather than the three pairs of insulating members described in GB 2286727, since this reduces the number of components of the assembly. Furthermore, the insulating members can be extruded, and shaped to fit against the corresponding recesses 6 in the arm member with reduced wear.

In the present embodiment, the enlarged end portion 4 includes a cut-out portion 7, which enables the weight and amount of material used to be considerably reduced. The end portion 4 in the present embodiment therefore consists of a strip of material shaped so as to define the required outer profile of the arm, including the recesses 6, but having a thickness selected to maximise the weight reduction but retain a sufficient strength in the component.

It will be appreciated that it would also be possible for the end portion to be manufactured with the same outer shape, but with a differently shaped cut-out portion 7, for example a circular bore.

Further weight-reducing cut-outs may be provided in the arm or keeper, such as the cut-out 8 shown in Figure 1, provided in the main body of the arm, between the two ends. The main consideration is that the component retains the strength to meet its loading requirements. In this context, however, it is an advantage of the extrusion process that the likelihood of cracks and voids in the manufactured components is reduced, compared with the conventional cast components, leading to an increase in strength and quality consistency of the manufactured components.

It will be appreciated from the foregoing description and the drawings that the arm and keeper are designed to permit both components to be manufactured by extrusion. All of the key features of these components are implemented having a substantially uniform cross-section, in order to allow them to be designed into the extruded component, without the need for further machining. This includes in particular the hinge arrangement 31, 32 in both components, the aperture portions with retaining protrusions 12, 22, and the weight reducing cut-outs in the arm member 1. In the illustrated embodiment, only the slots 14, 24 require stamping after the extrusion of the components, although other closure means could be provided, which remove this requirement, making it possible to complete the finished components by extrusion alone.

Furthermore, the other key components required to complete the clamp arm, such as the clamp liners, can also be manufactured by extrusion. Preferably, the frame into which the clamp arm is located, and the insulating spacers used to secure it in position, are also extruded.

The clamp arm assembly according to the present embodiment is therefore manufactured by extruding the arm 1 and the keeper 2, and then stamping the slots 14, 24 in the two components respectively, or forming these by other suitable methods. No further surface finishing is required, due to the smooth surface finish which may be obtained using extrusion. A higher throughput is possible, compared with the conventional technique of casting the components in batches, and furthermore the cast components either need additional surface finishing or will have a rougher surface which will cause greater wear in components such as the insulating spacers, when the clamp arm is in use.

It is possible to provide additional finishing of the extruded clamp arm components to reduce the occurrence of discharges from sharp edges of the components, when these are loaded to a high voltage. Conventional clamp arms are typically cast into a more curved shape than is possible when forming the components by extrusion, since the extruded components have a substantially uniform cross-section. This can result in extruded components being more susceptible to electrical discharges from their sharper edges. It may therefore be advantageous for certain applications to include a further finishing step of rounding some of the edges of the extruded components. For example, the outside edge of the arm 1 and keeper 2 at the clamping end of the clamp arm (which is closest, in use, to the clamped cable) may be provided with a chamfer or radiused edge over at least some of its length. Such finishing may be provided in any portion of the clamp arm which is found to be particularly sensitive to electrical discharge.

The geometry of the clamp arm is specifically designed to avoid the generation of visible corona or RIV (radio interference) when used with a high voltage conductor. In particular, the overall profile of the end of the clamp arm which surrounds the conductor is designed to be generally rounded, with a smooth external surface profile and no sharp extremities, in order to improve the corona discharge performance. When the clamp arm is employed in a spacer damper separating multiple bundled conductors, this profiling is particularly significant, since this end of the clamp arm is the region in which corona discharge is most likely to occur. The avoidance of sharp breaks or rapid changes in profile at the end of the clamp (commonly referred to as "outside the bundle") greatly improves the corona discharge performance.

Preferably, the profile is designed to ensure that any protrusion in the external surface profile of the clamp surrounding the conductor is more than 45 degrees away from the centre line of the clamp. It has been found that any such protrusions positioned in this way more than 45 degrees around the curved external surface will significantly reduce or avoid corona at high voltages, since these protrusions will be "inside the bundle" (i.e. positioned sufficiently far away from the centre line of the clamp not to constitute an extremity of the spacer damper which is particularly susceptible to corona discharge).

The resistance of the clamp arm to the generation of visible corona and RIV may be tested using test protocols defined in agreed standards such as IEC 61284:1997 and EN 61284:1998. The clamp arm according to the present invention is preferably designed to eliminate corona discharge at up to 750kV phase to phase. Clamp liners are extruded from elastomeric, or other suitable material, and each clamp liner can be used in either the arm or the keeper, since the aperture portion in the arm and the keeper has an identical profile.

Preferably, the frame and the insulating spacers are also extruded, in order to produce an entire assembly which can be manufactured quickly and simply, with a minimal requirement for additional machining, with low wear surfaces and a reduced cost both in terms of manufacturing and assembly. However, the clamp arm of the invention may also be used with a conventional frame, and still result in reduced wear.

The clamp arm is assembled by sliding the recess 32 of the keeper 2 over the cylindrical hinge portion 31 of the arm 1, and securing the components against lateral movement by inserting and securing a suitable retainer. The clamp liners 5 are easily located and aligned in the aperture portions of the arm and keeper due to their shape, which only allows them to be positioned in the correct alignment, and also prevents them from dislodging once slid into position. A given clamp liner can be used in either the arm or the keeper, due to the identical profile of the recess, meaning that only a single profile of clamp liner needs to be produced. However, different clamp liners may be produced having different internal profiles, in order to accommodate different profiles of conductors, or to apply different gripping pressures to a given profile or size of conductor. The clamp liners may be secured with a small amount of adhesive, in particular to prevent lateral movement.

The enlarged end portion 4 of the assembled clamp arm is inserted into a corresponding recess in a suitable frame, and located using the elastomeric spacer members, as discussed in GB 2286727. Instead of using the cast side plates described in that document, with a central bolt fastening, stamped plates may be used instead as the side plates, to secure the spacer members and the clamp arm in position. The stamped plates may be riveted to the frame, using locating holes. These locating holes may be produced at suitable locations in the frame in order to assist in locating the side plates, and the holes are particularly conveniently formed if the frame (or at least a portion of the frame which receives the clamp arm) is formed by extrusion.

The use of riveted side plates, which may be simple stamped plates, without a central bolt, allows the plates to be manufactured more simply, and at a lower cost, than cast side plates.

The spacer damper is typically supplied as a complete assembly, with the clamp arms attached to the frame. The user can then fit the assembly to the cables by clamping the clamp arm around a cable and securing the clamp arm with a fastener which is located in the slots 14, 24. Weight reduction of the clamp arms and/or the frame is especially advantageous during fitting, since the user fitting the assembly will typically have to carry the assembly and lift it into position, such that any weight reduction will reduce the effort required and increase fitting speed.

Typically, the open clamp arm is placed around the cable, and then moved into the closed position, with the clamp liners surrounding the cable. As described previously, due to the resilience of the elastomeric clamp liners, it is possible to provide a controlled gripping pressure on the cable, by selecting an appropriate size of the bore 3 defined by the clamp liners. This means that a considerable force may be required to bring the arm and keeper together, and compress the clamp liner around the cable, and for this reason it is usual to use a clamping tool to force the arm and keeper together while a fastener is secured through the slots 14,24.

In a conventional cast clamp arm, a circular recess is typically provided in the outer surfaces of the arm and the keeper, to locate the clamping tool while sufficient clamping pressure is applied during fitting. In the illustrated embodiment of the invention, locating grooves 18, 28 are provided in the extruded profile of the clamp arm, which are used to locate the clamping tool. In this way, the required locating means can be simply incorporated in the clamp arm without the requirement for any extra manufacturing steps.

The fastener conventionally used to secure the arm and keeper around the cable comprises an elongated central portion which passes through the slots 14, 24 in the arm and keeper, and has a head at each end, which prevents the arm and keeper from moving more than a fixed distance apart, when the clamp arm is secured shut. The fastener is loaded in tension, and acts against the force provided by the compression of the clamp liners around the cable. At least one head of the fastener is a locking head which is narrow enough in one direction to pass through one of the slots 14, 24 when oriented in an appropriate direction, but secures the clamp arm when pushed through the slot and rotated through 90°.

The fastener is typically supplied in position through the slot 14 of the arm, and retained loosely in the slot, for example by an O-ring of a sufficient size to prevent the head from passing though the slot, even when oriented along the slot. When the clamp arm is being fitted to a cable, the fastener can be rotated so that the head will pass through the slot 24 of the keeper when the clamp arm is clamped shut and, with the clamping tool providing a sufficient clamping force for the head to pass through the slot 24 and clear the outer surface of the keeper, the fastener can be simply rotated to secure the clamp arm in the closed position, and the clamping tool removed.

In order to prevent the fastener from rotating into an orientation where the head can pass back through the slot 24, allowing the clamp arm to open, a securing groove 29 is provided in the outer surface of the keeper, which runs perpendicular to the direction of the slot 24, and prevents rotational movement of the head when the fastener is secured in tension in the closed clamp arm. As with the locating grooves 18, 28, the securing groove 29 can be conveniently formed during the extrusion of the keeper, without any further manufacturing steps.

It will be appreciated that the fastener may be arranged with the locking head passing through either the arm or the keeper, and the securing groove may be correspondingly located in either or both of these components.

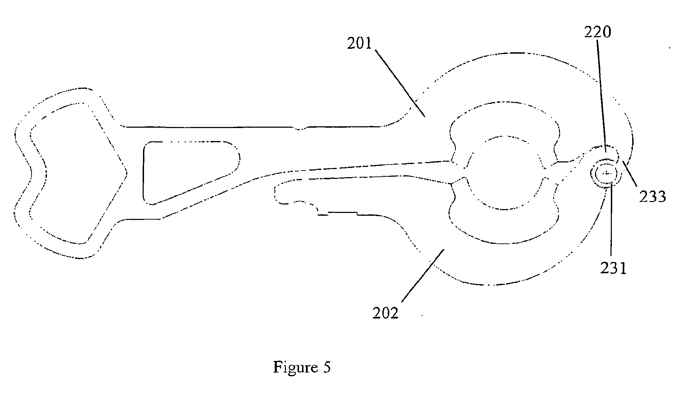

Figure 5 shows the profile of an alternative embodiment of the clamp arm according to the invention. The clamp arm is similar to that shown in Figures 1 to 4, but employs a different configuration at the hinge. In this arrangement, the arm 201 is again provided with a cylindrical hinge portion 231, joined to the remainder of the arm by a narrowed neck portion 233, as in the previous embodiment, and the hinge functions in the same way as described previously, by allowing the keeper 202 to rotate about the hinge portion 231 by means of a corresponding recess provided in the keeper. However, as shown in Figure 5, in this embodiment, the neck portion 233 is formed as a continuation of the external surface of the arm 201, and forms a smoother external profile around the arm, neck portion, outermost part of the hinge portion and the keeper, at the extremity of the clamp arm in the closed position. This provides a smoother profile across the external surface of the hinge.

In this way, the corona discharge performance of the clamp arm is improved further. Moreover, the recess between the projection 16 in the arm 1 and the projection 26 in the keeper 2, which can be seen in the closed position of the clamp arm of Figure 1, is removed, which also improves corona discharge performance.

Since this recess is no longer present in this embodiment, the recess in the keeper 202 is required to extend further around the inner side of the cylindrical hinge portion 231 in order to maintain the required contact of more than 180° of the surface of the hinge portion. This is achieved by providing a projection 220 at the end of the keeper, which extends around the inside of the hinge portion 231 and abuts, in the closed position, against a corresponding recess formed in the arm 201 by the inside of the neck portion 233 and a portion of the surrounding arm and hinge portion. Preferably, the projection 220 extends around the inside of the cylindrical hinge portion 231, as shown, to such an extent that it resists a force acting to pull the arm and keeper apart, since the projection 220 and the hinge portion 231 effectively interlock to resist such a load. This 'self-closing' effect increases the load capability of the hinge.

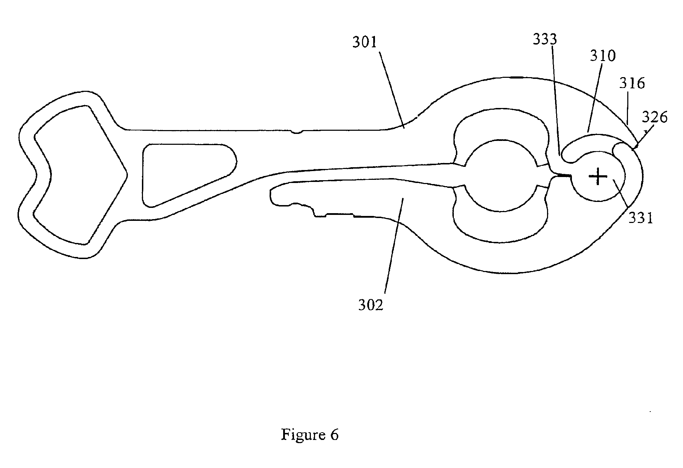

Figure 6 shows the profile of another alternative embodiment of the clamp arm according to the invention. In this case, the clamp arm is again similar to that shown in Figures 1 to 4, but with a further alternative hinge configuration. In the embodiment shown in Figure 6, the arm 301 is provided with a cylindrical hinge portion 331 and a narrowed neck portion 333 similar to those shown in Figures 1 to 4, but the end of the keeper 302 is arranged to extend further around the hinge portion to define a projection 326. A recess 310 is defined in the end of the arm 301 between the hinge portion 331 and an adjacent portion 316 of the arm, and this recess is shaped to receive the projection 326 as it moves around the hinge portion 331 when the clamp arm is opened.

In this embodiment, the projection 326 and recess 310 are arranged such that the projection 326 extends into at least a part of the recess 310 throughout the entire permitted motion of the keeper relative to the arm. In other words, the end of the projection 326 remains in the recess even when the clamp arm is in the fully closed position (as shown in Figure 6). This means that a relatively smooth profile can again be achieved when the clamp arm is closed, and the recess 310 is not exposed to the outer surface of the clamp arm in use, thereby significantly improving corona discharge performance.

Preferably, the projection formed by the end portion 316 of the arm 301 is positioned so that it lies more than 45 degrees from the centre line of the clamp, relative to the centre point of the hinge portion, since this means that the slight discontinuity in the exterior profile of the clamp arm caused by this projection will lie "outside the bundle" in use, thereby further reducing the susceptibility of the clamp arm to corona discharge.

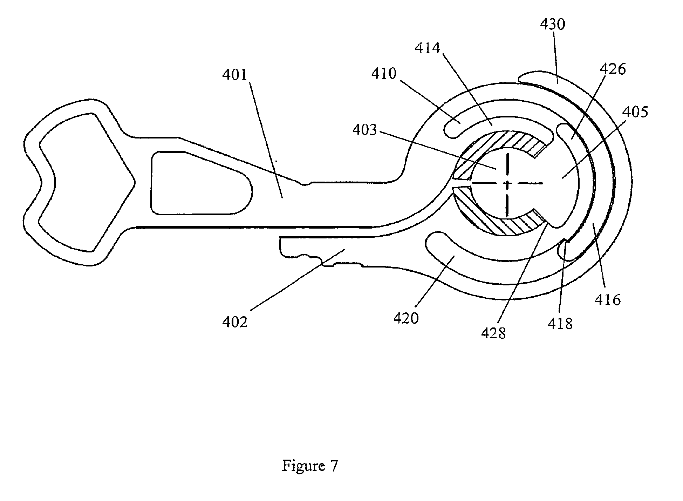

Figure 7 shows the profile of a further alternative embodiment of the clamp arm of the invention. Here, the clamp arm is arranged so that the hinged motion of the keeper 402 relative to the arm 401 occurs about the axis of the central bore 403 which receives the conductor in use. In other words, the relative motion of the arm and keeper when the clamp arm is opened is such that the keeper rotates about the axis of the bore. This geometry allows a particularly smooth profile to be adopted, since there is no separate hinge which must be incorporated at the distal end of the clamp arm, and the hinge is integrally incorporated in the clamping joint.

As can be seen in Figure 7, the end of the arm 401 is shaped so as to curve around the central bore 403 in the form of two parallel prongs or protrusions 414 and 416. Similarly, the end of the keeper 403 curves around the opposite side of the central bore in the form of two parallel prongs or protrusions 426 and 430, towards the prongs of the arm 401.

The prongs 414, 416 of the arm are separated to form a recess 410 in between, which is shaped to receive a corresponding one of the prongs 426 formed in the end of the keeper 402, when the clamp arm is opened. Similarly, the prongs 426, 430 of the keeper are separated to form a recess 420 in between, which is shaped to receive a corresponding one of the prongs 416 of the arm. In this way, the arm and keeper form interlocking pairs of prongs, the partial circular shape of which defines the relative rotational motion between the arm and the keeper.

It can be seen that the maximum rotational movement, which defines the maximum extent of opening of the clamp arm, is determined by the depth of the recesses 410 and 420 in the arm and keeper respectively, since the end of at least one of these recesses will act as a depth stop when it abuts the end of the corresponding prong at the point of maximum opening.

It can also be seen that the inner prong 414 of the arm is shorter than the outer prong 416, in order to provide a space 415 between the end of the inner prong 414 and the keeper to permit rotational movement. The portion of the keeper inside the inner prong 426 of the keeper is shaped to form a shoulder 428 which may abut the end of the inner prong 414 of the arm at maximum opening of the clamp arm, and may also provide a restriction to the degree of opening, to prevent the clamp arm being opened too far. It will be appreciated that any one of the recesses 410, 420 or the shoulder 428 may act as the depth stop, and that further rotation will be prevented by the first of these stops which comes into contact with the end of the corresponding prong during opening of the clamp arm, or that each of these stops may be arranged to abut the end of the corresponding prong at substantially the same point of relative rotation of the arm and keeper in order to provide a strong and stable restriction to the degree of opening.

As illustrated in Figure 7, the outer prong 430 of the keeper also extends beyond the length of the inner prong 426. It is of particular significance that this outer prong 430 extends to a large extent around the outside of the arm, since this prong forms the outer surface of the distal end of the clamp arm. The profile of the prong 430 is therefore important to the corona discharge performance of the clamp arm. Using the configuration shown in Figure 7, it is possible to provide an extremely smooth external profile to the clamp arm, by extending the prong 430 smoothly around the outside of the clamp arm, since no joins or openings are required near the extremity of the clamp arm. This results in a significantly improved corona discharge performance. The end of the prong 430 can be extended to significantly more than 45 degrees from the centre line of the clamp, and in the arrangement of Figure 7 it can be seen that the end of the prong 430 is well away from the distal extremity of the clamp arm, at almost 90 degrees from the centre line of the clamp. The extent to which the prong 430 can extend around the arm is limited in this case mainly by the requirement to allow a sufficient range of rotation without abutting the main body of the arm.

The rotational motion of the arm and keeper may be restricted in the closing direction by cooperating shoulders formed in any two adjacent sliding surfaces. In Figure 7, these are shown as a shoulder 418 formed near the end of the outer prong 416 of the arm, which is prevented from moving further into the closed position by a corresponding shoulder in the adjacent surface of the inner prong 426 of the keeper.

It should be noted that the interlocking arrangement of the prongs of the arm and keeper may be reversed so that the outer surface of the clamp arm is formed by an outer prong of the arm 403, rather than the keeper 402 as shown in Figure 7.

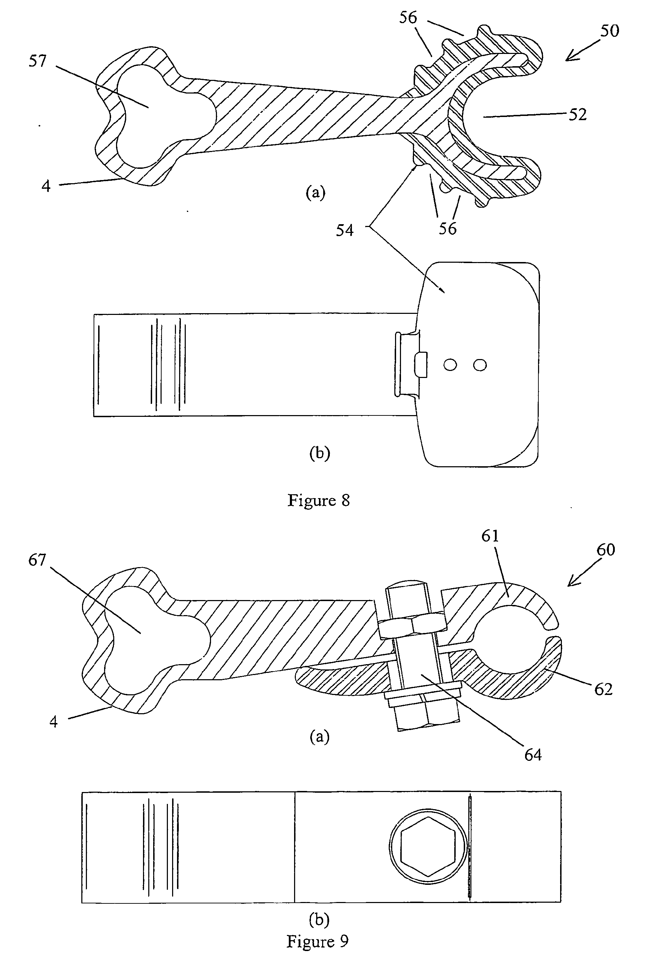

Figures 8 and 9 show alternative arrangements of spacer damper arms. Both of these arrangements preferably use the same enlarged end portion 4 as in the embodiment shown in Figures 1 to 3, and are attached to a spacer damper frame in the same way as described above. Furthermore, the arms of Figures 8 and 9 are also formed by extrusion, providing the same advantages of reduced cost and complexity of manufacture and assembly, and reduced wear on the insulating members when the arms are attached to a frame. However, as shown in Figures 8 and 9, these arms employ different arrangements for gripping the cable at the opposite end of the arm from the enlarged end portion 4.

Figure 8 shows by way of example, which does not form part of the invention, an "Armour Grip" assembly 50 in which the end of the arm furthest from the frame is shaped to include a locating recess 52 in which, in use, the cable is located. This provides a simple way of positioning the arm against the cable, since it need only be pushed against the cable to be placed in position. The end of the arm having the locating recess is also provided with an elastomeric liner 54, which may be moulded over the arm, or otherwise located in position, for example by being slid over the arm. This elastomeric liner provides a resilient locating means for the cable, whereby to provide some damping.

The cable is located in the locating recess using a plurality of helical rods (not shown), which are wrapped around the cable and the arm, and extend along a portion of the cable in either direction from the area where it rests against the arm. In this way, the helical rods secure the cable to the arm. The elastomeric liner 54 typically extends around the end of the arm containing the locating recess 52, as shown in Figure 8(a), in order to provide a resilient locating means for the helical rods, and may be shaped to include further locating recesses 56 for the rods.

Figure 9 shows a cantilever-type clamp arm assembly 60, which uses metal-on-metal contact with the cable, without requiring a clamp liner. As with the embodiment of Figures 1 and 2, the assembly employs an arm 61 and a keeper 62, which form an aperture at the end furthest from the frame, in use, which is clamped around the cable. However, in this arrangement, the arm and keeper are not hinged, but are simply fixed together around the cable using a bolt 64, or other suitable fastener. This arrangement may be manufactured by simply extruding both the arm 61 and the keeper 62.

As shown in Figures 8(a) and 9(a), the enlarged end portion 4 of the extruded arms preferably includes a weight-reducing cut-out portion 57, 67, similar to the cut-out portion 7 described in connection with Figure 1.

It will be appreciated that further cut-out portions may be provided, in order to reduce weight and material costs, as long as the arm retains sufficient strength. Such cut-outs may take a similar form to the cut-out 8 shown in Figure 1, or may take other forms.

The arm assemblies described above can be used with known spacer damper frames, such as that described in GB 2286727, and provide the advantage of reduced wear in the insulating members. However, it is preferred to use the clamp arms with particular frames which are also extruded, in order to increase the advantageous effect of reduced wear. Extruded frames also provide other similar advantages to the extruded arm assemblies described above, such as reduced complexity and cost of manufacture and assembly. Furthermore, weight reducing cut-out portions may be designed into the frames, while still giving the required structural integrity, due to the decreased risk of the formation of cracks during extrusion, when compared with casting, and allowing more complex designs to be produced simply.

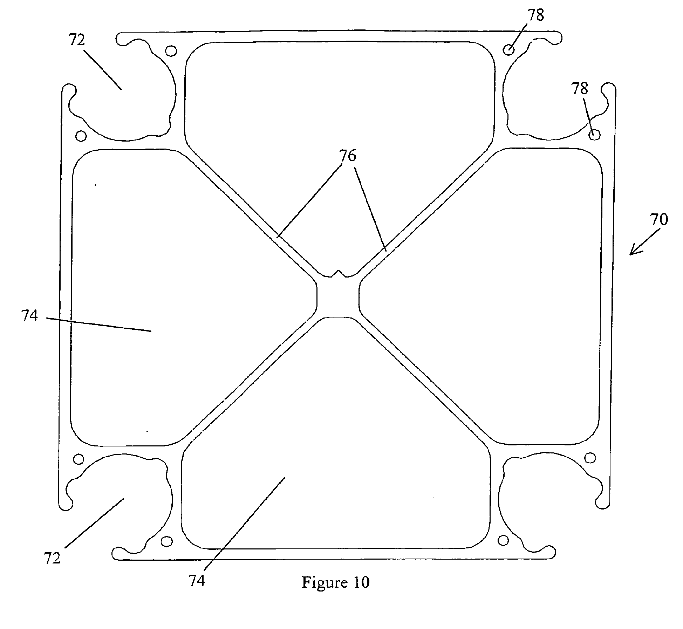

Figures 10 to 16 show various kinds of spacer damper frames which utilise the advantageously smooth surface finish of an extruded component, at least in the region where the clamp arm is received in the frame. Whole frames may be formed by extrusion, or alternatively an extruded modular damper housing may be used, which includes a recess for receiving the enlarged end portion of a clamp arm, and which is attached to a frame or spacer members, together with one or more other modular damper housings. In this alternative arrangement, the modular housings can be formed by extrusion, in order to provide smoother contact surfaces with the insulating members to reduce wear, but the modular housings can be fixed relative to one another using frame or spacer components which may or may not themselves be extruded. In this way, it is possible to use standardised modular housings together with a choice of different sized frame or spacer components, in order to meet the requirements of various different conductor or cable spacings, rather than having to produce entire frames in different sizes.

Turning to Figure 10, a substantially square frame 70 is shown, which is formed by extrusion of the entire profile illustrated. The frame includes four equally spaced damper recesses 72, positioned in the corners of the square profile shape. Large cut-outs 74 are incorporated into the profile, in order to reduce the weight of the frame, and also the amount of material required. As stated previously, the weight can be reduced in this way more effectively in an extruded component than in a cast component, since an extruded component is less susceptible to the formation of cracks, such that more material can be removed without compromising the strength of the component. The rigidity of the frame 70 is maintained by bracing members 76, which are defined by the shapes of the cut-outs 74.

Figure 10 also shows the locating holes 78, which are used to secure side plates which hold the insulating members and clamp arms in position, as described previously. Different numbers of locating holes may be provided, in any suitable positions, or alternative means of locating the side plates may be used instead, such as the central bolt and locating recesses described in GB 2286727.

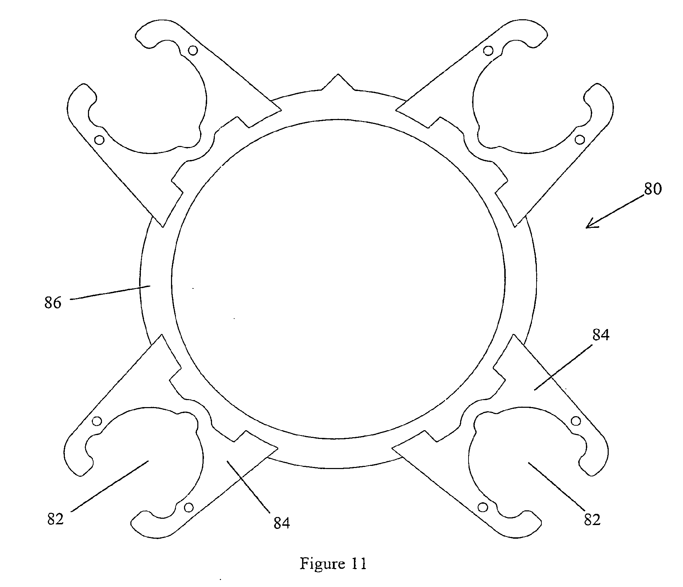

Figure 11 shows an alternative arrangement of a frame 80, in which modular damper housings 84 are attached to a circular spacer frame 86, each damper housing including a damper recess 82. Once again, in this arrangement, four equally spaced damper recesses are provided, but by contrast with the arrangement of Figure 10, the damper recesses 82 are positioned around a circular frame. It will be appreciated that the entire frame could be manufactured by extrusion, as in the arrangement of Figure 10, but by utilising modular damper housings 84, it is possible to use the same housings with different sizes of spacer frames to achieve different cable spacings. Also, the reduction in wear of the insulating members can be achieved by extruding only the modular housings 84, such that these can be used with a spacer frame which may or may not be extruded, without affecting this advantage. Furthermore, different numbers of identical modular damper housings may be fitted around a given size of spacer frame for different applications, reducing the total number of different components which need to be manufactured for different applications.

The modular clamp arm (or damper) housings are individual components which are intended to receive a clamp arm in the same way as the recess typically provided in a spacer damper frame. However, these components are modular in the sense that they provide an individual clamp arm reception recess or pocket in the form of a component which may be attached at any point onto a separate frame. This modular configuration therefore allows a supply of identical standard components (i.e. the modular housing) to be used in different ways to produce different spacer damper arrangements by affixing them to different configurations of frames of spacer components, or by affixing them at different points on a given type of frame or spacer.

The modular damper housings 84 are typically fitted to the spacer frame 86 by welding, but may utilise any other suitable means of attachment.

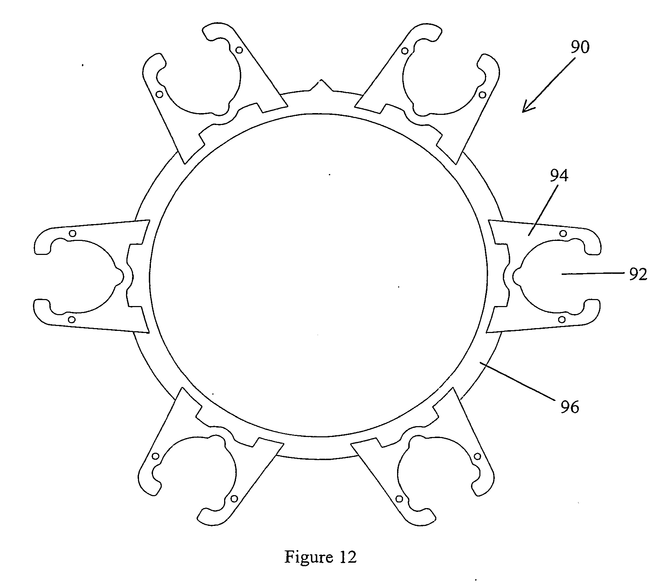

Figure 12 shows a modification of the arrangement of Figure 11, in which a frame 90 is provided with six modular damper housings 94, each including a damper recess 92 for receiving a clamp arm, attached to a circular spacer frame 96 which is larger than the corresponding spacer frame 86 of Figure 11.

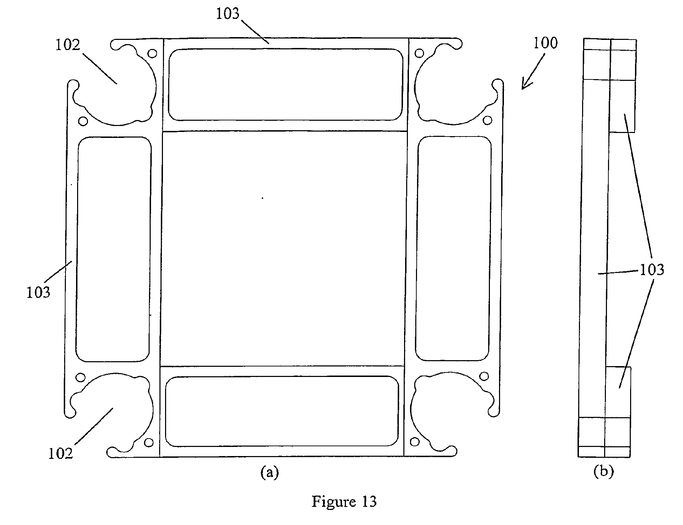

Figure 13 shows a square frame 100 with four damper recesses 102 positioned at the corners, which is constructed from four identical modular components 103. Each modular component 103 comprises an elongated component having a damper recess 102 at each end, and these components are arranged to form the sides of the square of the frame 100, by orienting the components perpendicular to one another such that they are overlapping at one end, and aligning the damper recesses, as shown in Figure 13(a).

Figure 13(b) shows a side view of the assembled frame, in which it can be seen that the thickness of a single modular component 103 is half the thickness of the corner damper recesses 102 required to house the clamp arms, such that the frame 100 only has the 'double' thickness at the corners, where the clamp arms are actually accommodated, thereby reducing the weight of the frame. However, the individual modular components are of a uniform thickness, and can therefore be easily extruded, and are also identical, resulting in a reduction in the number of different components which need to be manufactured to produce the frame.

Compared with a frame extruded in a single piece, such as that shown in Figure 10, and having a uniform thickness, the frame 100 of Figure 13 utilises an advantageous reduction in thickness and weight away from the corners, while maintaining the required thickness at the corner damper recesses 102. Furthermore, the frame 100 only requires the extrusion of smaller individual components, than a single piece extruded frame, which may reduce the cost of the extrusion die.

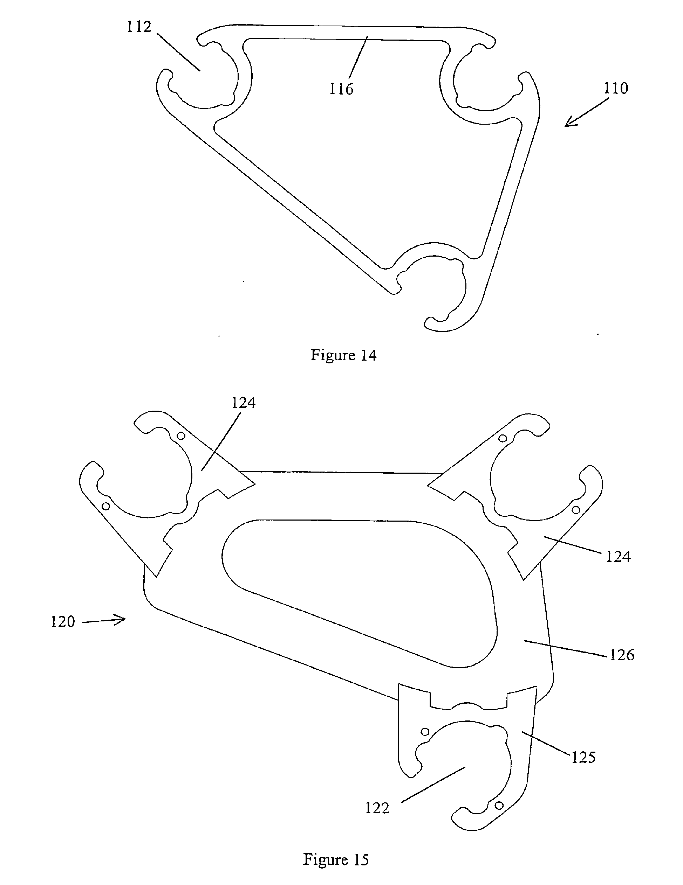

Figure 14 illustrates an alternative arrangement of a single piece extruded frame 110, having three damper recesses 112 separated by simple spacer members 116. A similar arrangement utilising modular damper housings is shown in Figure 15. The spacing and arrangement of the damper recesses 122 are similar to those of Figure 14, but the frame 120 is formed from three modular damper housings 124, 125 attached to a spacer frame 126. In this particular example, two different types of modular damper housing 124, 125 are used, in order to provide the required orientation of the damper recesses relative to the spacer frame 126. It will be appreciated that in the case of the modular frame, different spacings could be achieved by attaching the modular damper housings 124, 125 to a larger or smaller spacer frame.

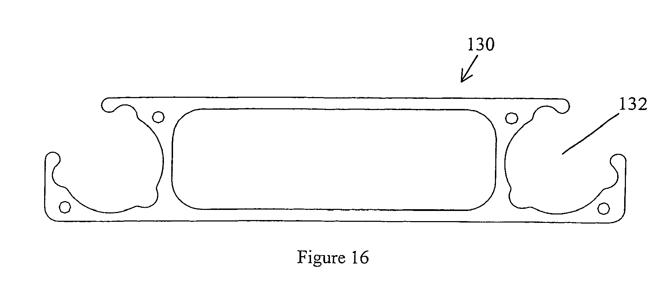

Figure 16 shows a frame 130 having two damper recesses 132, which is formed from a single extrusion. The arrangement corresponds closely to a single one of the modular components 103 of Figure 13, although the frame 130 may be of a greater thickness than the modular components 103 if it is to be used alone, since the damper recesses 132 may need to be thicker than the modular components 103, since the modular components of the arrangement of Figure 13 are doubled up at the corners of the frame 100. However, the modular components 103 and the frame 130 may advantageously be formed, with different thicknesses for the two different applications, from the same extrusion die.

For certain applications, such as where there is less of a problem with vibration or cable galloping, it is known to use spacer assemblies which do not include a separate frame and clamp arms, with damping provided by elastomeric components between the two, but instead comprise a single elongated assembly having a clamping portion at each end, separated by an integral spacing portion. In effect, such an assembly is equivalent to a spacer of a suitable length, with the clamping portion of a conventional clamp arm at each end. Such assemblies may also be provided with more than two clamping portions, spaced apart by a suitable integral frame or spacing portion. Known assemblies of this type include rigid spacer assemblies utilising metal-to-metal contact with the cable, as well as semi-flexible assemblies which utilise clamp liners in the clamping portions to provide a degree of damping.

These spacer assemblies which do not include a separate damper frame may be provided with extruded spacer assemblies comprising a plurality of clamping portions separated by an integral spacing portion. The clamping portions may include a hinged keeper which is secured using a suitable fastener, or a separate keeper attached by other means such as a bolt.

An extruded rigid spacer assembly preferably comprises an assembly having a clamping portion similar to that shown in Figure 9, but instead of including the enlarged end portion 4 shown in Figure 9, the main body of the arm component 61 extends for a specific spacing distance, and includes another clamping portion at the opposite end of the assembly, to form a symmetrical component, with a spacing portion in the centre, and a clamping portion at each end, each clamping portion including a keeper and fastening bolt, or equivalent. This arrangement provides the advantage over the conventional rigid spacer assembly that the components are formed by extrusion, leading to simplified and lower cost manufacture and assembly. Also, cut-outs may be designed into the profile to reduce weight and material cost. Alternative arrangements may include more than two clamping portions, and some edges of the components may be subjected to further finishing steps to reduce electrical discharge, as described above.

Similarly, an extruded semi-flexible spacer assembly preferably comprises an assembly having a clamping portion similar to that shown in Figure 1, including clamp liners in the clamping aperture, but includes another such clamping portion at the opposite end of the assembly. Similar fastening means can be used as described in connection with the arrangement of Figure 1, in order to secure the clamping means around the respective cables, when in use. Again, modifications may be made to this basic arrangement, as described in connection with the rigid spacer assembly.

The extruded components of the arms, keepers, frames, and other spacer assemblies described above are preferably made from a suitable aluminium alloy, while the elastomeric insulating members are preferably extruded from a suitable rubber.

Although the foregoing description refers to the formation of the various described components by a process of extrusion, it will be appreciated that their suitability for formation by this method is based on the design of these components having a substantially uniform cross-sectional profile. It will therefore be further appreciated that any of the described components may alternatively be formed using other existing or contemporary metal profiling techniques including, but not limited to, laser or water jet cutting. These alternative techniques generally also provide the required tolerances and surface finishes.

Furthermore, references to the uniform cross-section of the various components relates to the cross-section in the lateral plane, i.e. the cross-sectional profile shown in Figures 1, 2, 5-7, 8(a), 9(a), 10-12, 13(a) and 14-16, and references to formation of these components by extrusion or other profiling techniques relate to the formation of the profile in that plane.

## Claims

1. A clamp arm (10) for use in spacer dampers for the separation of multiple transmission conductors, the clamp arm having one distal extremity designed to support a cable and the other extremity being provided with an enlarged end portion (4) which is arranged to be received, in use, in damping engagement with a cooperating recess (72) in a frame (70), the clamp arm comprising an arm member (1) and a keeper member (2), the arm member and keeper member being arranged to grip the cable, in use, when fastened together,
**characterised in that** the clamp arm (10) has a substantially uniform lateral cross-section, and is formed by extrusion or other profiling technique.

2. A clamp arm according to claim 1, wherein the keeper member (2) is attached to the arm member (1) by hinge means operable to open the clamp arm, the hinge means being formed by cooperating portions of the arm member and keeper member having substantially uniform cross-sections, whereby to allow the hinge means to be formed by extrusion or other profiling of the arm member and keeper member.

3. A clamp arm according to claim 2, wherein the hinge means are arranged such that the arm member (401) and keeper member (402) are rotatable relative to one another about substantially the same axis as the axis of the gripped cable.

4. A clamp arm according to claim 3, wherein the arm member (401) and keeper member (402) are each provided with a curved prong (416, 426) slidably receivable in a corresponding recess (420, 410) provided in the other member, on relative rotation of the arm and keeper members to open the clamp arm, the prongs and recesses defining the path of the relative rotation.

5. A clamp arm according to claim 2, wherein the hinge means comprises a substantially cylindrical hinge portion (31) in one of the arm member and the keeper member, arranged to cooperate with a corresponding recess (32) in the other member, whereby to permit rotation of the other member about the axis of the cylindrical hinge portion.

6. A clamp arm according to claim 5, wherein the recess (32) in the other member is arranged to extend around more than half of the circumference of the cylindrical hinge portion (31).

7. A clamp arm according to claim 6, wherein the recess (32) in the other member is arranged to extend sufficiently far around the circumference of the cylindrical hinge portion (31) to provide resistance to a force acting to push the arm and keeper members (1, 2) apart.

8. A clamp arm according to any of claims 5 to 7, wherein the hinge means include a bore (34) arranged to receive retaining means for preventing relative lateral movement of the arm member (1) and keeper member (2).

9. A clamp arm according to any of claims 1 to 8, wherein each of the arm member and keeper member further includes a clamp recess, the clamp recesses forming an aperture arranged to surround the cable when the clamp arm is in a closed position, in use, around the cable, each clamp recess being arranged to receive a clamp liner (5) between the clamp recess and the cable.

10. A clamp arm according to claim 9, wherein each clamp recess has a cross-sectional shape such that when a correspondingly shaped clamp liner (5) is positioned in the clamp recess, the clamp liner is retained against the surface of the clamp recess.

11. A clamp arm according to claim 10, wherein at least one of the clamp recesses is shaped to include one or more protrusions (12, 22) which provide a narrowed neck to the clamp recess, whereby to retain the clamp liner (5) against the surface of the clamp recess.

12. A clamp arm according to claim 10 or 11, wherein both clamp recesses have the same cross-sectional shape.

13. A clamp arm according to any of claims 2 to 12, wherein the hinge means are arranged to allow the arm member (1) and keeper member (2) to open to an angle of at least 90 degrees.

14. A clamp arm according to any of claims 1 to 13, wherein the external profile of the distal extremity of the clamp arm is such that no recesses are exposed to the exterior surface when the arm member (1) and keeper member (2) are gripping a cable, in use.

15. A clamp arm according to any preceding claim, wherein the distal end of the clamp arm has a substantially circular external profile.

16. A clamp arm according to any preceding claim, wherein the external profile of the distal extremity of the clamp arm forms a smooth curve which extends for at least 45 degrees either side of the centre line of the clamp arm, relative to the centre of the clamped conductor, in use.

17. A clamp arm according to any preceding claim, wherein the external profile of the distal extremity of the clamp arm is sufficiently free of sharp discontinuities to prevent corona discharge at a voltage of 750kV phase to phase, in use.

18. A clamp arm according to any preceding claim, wherein the cross-sectional profile of the clamp arm includes one or more cut-out portions (7, 8).

19. A clamp arm according to claim 18, wherein the enlarged end portion (4) includes a cut-out portion (7).

20. A clamp arm assembly comprising a clamp arm (10) according to any preceding claim, and one or more extruded clamp liners (5) for surrounding and gripping a cable, in use.

21. A spacer damper for the separation of multiple transmission conductors, comprising a frame (70; 80) to which are mounted a plurality of clamp arms (10) according to any of claims 1 to 20, the enlarged end portion (4) of each clamp arm being received in damping engagement with a cooperating recess (72; 82) in the frame, wherein at least the cooperating recesses in the frame are formed by extrusion or other profiling technique.

22. A spacer damper according to claim 21, wherein the frame (80) comprises a plurality of modular clamp arm housings (84) and a spacer frame (86),
each modular clamp arm housing having a substantially uniform cross-section and being formed by extrusion or other profiling technique,
the cross-sectional profile of each housing being such as to define one of the recesses (82) for receiving and securing one of the clamp arms (10), and attachment means,
the clamp arm housings being attached to the spacer frame by the attachment means to position the clamp arm housings relative to each other.

23. A spacer damper according to claim 21 or 22, wherein each clamp arm (10) is received in, and spaced from, the cooperating recess (72; 82) in the frame (70; 80) by means of a plurality of extruded spacer members.

## Patentansprüche

1. Klemmarm (10) für die Verwendung in Abstandshalter-Dämpfungsvorrichtungen für die Trennung von mehreren Übertragungsleitern, wobei der Klemmarm eine distale Extremität aufweist, die dazu ausgelegt ist, ein Kabel zu halten und die andere Extremität mit einem vergrößerten Endabschnitt (4) versehen ist, der dazu angeordnet ist, in Gebrauch in dämpfendem Eingriff mit einer zusammenwirkenden Aussparung (72) in einem Rahmen (70) aufgenommen zu werden, wobei der Klemmarm ein Armglied (1) und ein Halteglied (2) umfasst, wobei das Armglied und das Halteglied dazu angeordnet sind, in Gebrauch das Kabel zu greifen, wenn sie miteinander verbunden sind,
**dadurch gekennzeichnet, dass** der Klemmarm (10) einen im Wesentlichen einheitlichen seitlichen Querschnitt aufweist und durch Extrusion oder ein anderes Formgebungsverfahren gebildet ist.

2. Klemmarm nach Anspruch 1, wobei das Halteglied (2) durch Scharniermittel an dem Armglied (1) befestigt ist, die wirksam sind, den Klemmarm zu öffnen, wobei die Scharniermittel durch zusammenwirkende Abschnitte des Armglieds und des Halteglieds mit im Wesentlichen einheitlichen Querschnitten gebildet sind, um dadurch zuzulassen, dass die Scharniermittel durch Extrusion oder andere Formgebung des Armglieds und des Halteglieds gebildet werden.

3. Klemmarm nach Anspruch 2, wobei die Scharniermittel derart angeordnet sind, dass das Armglied (401) und das Halteglied (402) um im Wesentlichen die selbe Achse wie die Achse des gegriffenen Kabels relativ zueinander drehbar sind.

4. Klemmarm nach Anspruch 3, wobei das Armglied (401) und das Halteglied (402) jeweils mit einem gekrümmten Zapfen (416, 426) versehen sind, der bei relativer Drehung des Arm- und des Halteglieds gleitfähig in einer entsprechenden, in dem anderen Glied vorgesehenen Aussparung (420, 410) aufnehmbar ist, um den Klemmarm zu öffnen, wobei die Zapfen und die Aussparungen die Bahn der relativen Drehung definieren.

5. Klemmarm nach Anspruch 2, wobei das Scharniermittel einen im Wesentlichen zylindrischen Scharnierabschnitt (31) in dem Armglied oder dem Halteglied umfasst, der dazu angeordnet ist, mit einer entsprechenden Aussparung (32) in dem anderen Glied zusammenzuwirken, um dadurch Drehung des anderen Glieds um die Achse des zylindrischen Scharnierabschnitts zuzulassen.

6. Klemmarm nach Anspruch 5, wobei die Aussparung (32) in dem anderen Glied dazu angeordnet ist, sich um mehr als die Hälfte des Umfangs des zylindrischen Scharnierabschnitts (31) zu erstrecken.

7. Klemmarm nach Anspruch 6, wobei die Aussparung (32) in dem anderen Glied dazu angeordnet ist, sich ausreichend weit um den Umfang des zylindrischen Scharnierabschnitts (31) zu erstrecken, um Widerstand gegen eine Kraft vorzusehen, die wirkt, um das Arm- und das Halteglied (1, 2) auseinander zu drücken.

8. Klemmarm nach einem der Ansprüche 5 bis 7, wobei die Scharniermittel eine Bohrung (34) umfassen, die dazu angeordnet ist, Rückhaltemittel zum Verhindern von relativer seitlicher Bewegung des Armglieds (1) und des Halteglieds (2) aufzunehmen.

9. Klemmarm nach einem der Ansprüche 1 bis 8, wobei das Armglied und das Halteglied jeweils weiter eine Klemmaussparung umfassen, wobei die Klemmaussparungen eine Öffnung bilden, die dazu angeordnet ist, das Kabel zu umschließen, wenn sich der Klemmarm in Gebrauch in einer geschlossenen Stellung um das Kabel befindet, wobei die Kabelaussparungen jeweils dazu angeordnet sind, ein Klemmfutter (5) zwischen der Klemmaussparung und dem Kabel aufzunehmen.

10. Klemmarm nach Anspruch 9, wobei die Klemmaussparungen jeweils eine derartige Querschnittsform aufweisen, dass wenn ein entsprechend geformtes Klemmfutter (5) in der Klemmaussparung positioniert ist, das Klemmfutter an der Oberfläche der Klemmaussparung anliegend zurückgehalten wird.

11. Klemmarm nach Anspruch 10, wobei mindestens eine der Klemmaussparungen dazu geformt ist, einen oder mehrere Vorsprünge (12, 22) zu umfassen, die die Klemmaussparung mit einem verengten Hals versehen, um dadurch das Klemmfutter (5) an der Oberfläche der Klemmaussparung anliegend zurückzuhalten.

12. Klemmarm nach Anspruch 10 oder 11, wobei beide Klemmaussparungen die gleiche Querschnittsform aufweisen.

13. Klemmarm nach einem der Ansprüche 2 bis 12, wobei die Scharniermittel dazu angeordnet sind, zuzulassen, dass das Armglied (1) und das Halteglied (2) bis zu einem Winkel von mindestens 90 Grad öffnen.

14. Klemmarm nach einem der Ansprüche 1 bis 13, wobei das äußere Profil der distalen Extremität des Klemmarms derart ist, dass keine Aussparungen der äußeren Oberfläche ausgesetzt sind, wenn das Armglied (1) und das Halteglied (2) in Gebrauch ein Kabel greifen.

15. Klemmarm nach einem der vorangehenden Ansprüche, wobei das distale Ende des Klemmarms ein im Wesentlichen kreisförmiges äußeres Profil aufweist.

16. Klemmarm nach einem der vorangehenden Ansprüche, wobei das äußere Profil der distalen Extremität des Klemmarms einen glatten Bogen bildet, der sich in Gebrauch um mindestens 45 Grad auf beiden Seiten der Mittellinie des Klemmarms relativ zu der Mitte des geklemmten Leiters erstreckt.

17. Klemmarm nach einem der vorangehenden Ansprüche, wobei das äußere Profil der distalen Extremität des Klemmarms ausreichend frei von scharfen Unstetigkeiten ist, um in Gebrauch Coronaentladungen bei einer Spannung zwischen Phasen von 750 kV zu verhindern.

18. Klemmarm nach einem der vorangehenden Ansprüche, wobei das Querschnittsprofil des Klemmarms einen oder mehrere ausgeschnittene Abschnitte (7, 8) umfasst.

19. Klemmarm nach Anspruch 18, wobei der vergrößerte Endabschnitt (4) einen ausgeschnittenen Abschnitt (7) umfasst.

20. Klemmarmbaugruppe, umfassend einen Klemmarm (10) nach einem der vorangehenden Ansprüche und ein oder mehrere extrudierte Klemmfutter (5), um in Gebrauch ein Kabel zu umschließen und zu greifen.

21. Abstandshalter-Dampfungsvorrichtung für die Trennung mehrerer Übertragungsleiter, umfassend einen Rahmen (70; 80) an dem mehrere Klemmarme (10) nach einem der Ansprüche 1 bis 20 angebracht sind, wobei der vergrößerte Endabschnitt (4) jedes Klemmarms in dämpfendem Eingriff mit einer zusammenwirkenden Aussparung (72; 82) in dem Rahmen aufgenommen ist, wobei mindestens die zusammenwirkenden Aussparungen in dem Rahmen durch Extrusion oder ein anderes Formgebungsverfahren gebildet sind.

22. Abstandshalter-Dämpfungsvorrichtung nach Anspruch 21, wobei der Rahmen (80) mehrere modulare Klemmarmgehäuse (84) und einen Abstandshalterrahmen (86) umfasst,
wobei jedes modulare Klemmarmgehäuse einen im Wesentlichen einheitlichen Querschnitt aufweist und durch Extrusion oder ein anderes Formgebungsverfahren gebildet ist,
wobei das Querschnittsprofil jedes Gehäuses derart ist, dass es eine der Aussparungen (82) zum Aufnehmen und Fixieren von einem der Klemmarme (10) und Befestigungsmittel definiert,
wobei die Klemmarmgehäuse durch die Befestigungsmittel an dem Abstandshalterrahmen befestigt sind, um die Klemmarmgehäuse relativ zueinander zu positionieren.

23. Abstandshalter-Dämpfungsvorrichtung nach Anspruch 21 oder 22, wobei die Klemmarme (10) jeweils mittels mehrerer extrudierter Abstandshalterglieder in der zusammenwirkenden Aussparung (72; 82) in dem Rahmen (70; 80) aufgenommen und davon beabstandet sind.

## Revendications

1. Bras de serrage (10) destiné à être utilisé dans des amortisseurs d'espacement pour assurer la séparation de multiples conducteurs de transmission, le bras de serrage possédant une extrémité distale conçue pour soutenir un câble et l'autre extrémité étant dotée d'une portion d'extrémité agrandie (4) qui est agencée pour être reçue, lors de l'utilisation, en solidarisation d'amortissement avec un évidement coopérant (72) dans un cadre (70), le bras de serrage comportant un élément de bras (1) et un élément de maintien (2), alors que l'élément de bras et l'élément de maintien sont agencés pour agripper le câble, lors de l'utilisation, quand ils sont attachés ensemble,
**caractérisé en ce que** le bras de serrage (10) présente une coupe en plan latéral sensiblement uniforme, et est formé par extrusion ou par une autre technique de profilage.

2. Bras de serrage selon la revendication 1, l'élément de maintien (2) étant attaché à l'élément de bras (1) par des moyens à articulation exploitables pour ouvrir le bras de serrage, les moyens à articulation étant formés par des portions coopérantes de l'élément de bras et de l'élément de maintien qui ont des coupes sensiblement uniformes, ce qui permet par conséquent aux moyens à articulation d'être formés par extrusion ou par tout autre profilage de l'élément de bras et de l'élément de maintien.

3. Bras de serrage selon la revendication 2, les moyens à articulation étant agencés de sorte que l'élément de bras (401) et l'élément de maintien (402) sont aptes à tourner l'un par rapport à l'autre sensiblement autour du même axe que l'axe du câble agrippé.

4. Bras de serrage selon la revendication 3, l'élément de bras (401) et l'élément de maintien (402) étant chacun doté d'une dent incurvée (416, 426) apte à être reçue de façon coulissante dans un évidement correspondant (420, 410) ménagé dans l'autre élément, lors d'une rotation relative des éléments de bras et de maintien afin d'ouvrir le bras de serrage, les dents et les évidements définissant le trajet de la rotation relative.

5. Bras de serrage selon la revendication 2, les moyens à articulation comprenant une portion à articulation sensiblement cylindrique (31) dans l'un des postes suivants, à savoir l'élément de bras et l'élément de maintien, agencés pour coopérer avec un évidement correspondant (32) dans l'autre élément, ce qui permet par conséquent à l'autre élément de tourner autour de l'axe de la portion à articulation sensiblement cylindrique.

6. Bras de serrage selon la revendication 5, l'évidement (32) dans l'autre élément étant agencé pour se prolonger autour de plus de la moitié de la circonférence de la portion à articulation cylindrique (31).

7. Bras de serrage selon la revendication 6, l'évidement (32) dans l'autre élément étant agencé pour se prolonger suffisamment loin autour de la circonférence de la portion à articulation cylindrique (31) pour procurer la résistance face à une force laquelle agit pour pousser et éloigner les éléments de bras et de maintien (1, 2) l'un de l'autre.

8. Bras de serrage selon l'une quelconque des revendications 5 à 7, les moyens à articulation englobant un alésage (34) agencé pour recevoir des moyens de retenue afin d'empêcher tout mouvement latéral relatif de l'élément de bras (1) et de l'élément de maintien (2).

9. Bras de serrage selon l'une quelconque des revendications 1 à 8, chacun des postes suivants, à savoir l'élément de bras et l'élément de maintien, englobant en outre un évidement de serrage, les évidements de serrage constituant une ouverture agencée pour entourer le câble lorsque le bras de serrage se trouve en position fermée, lors de l'utilisation, autour du câble, chaque évidement de serrage étant agencé pour recevoir un garnissage de serrage (5) lequel est prévu entre l'évidement de serrage et le câble.

10. Bras de serrage selon la revendication 9, chaque évidement de serrage présentant une forme en coupe de sorte que lorsqu'un garnissage de serrage (5) de forme correspondante est positionné dans l'évidement de serrage, le garnissage de serrage sera retenu contre la surface de l'évidement de serrage.

11. Bras de serrage selon la revendication 10, l'un au moins des évidements de serrage étant façonné de sorte à comporter une ou plusieurs saillies (12, 22) qui procurent un col rétréci à l'évidement de serrage, ce qui permet par conséquent de retenir le garnissage de serrage (5) contre la surface de l'évidement de serrage.

12. Bras de serrage selon la revendication 10 ou 11, les deux évidements de serrage ayant la même forme en coupe.

13. Bras de serrage selon l'une quelconque des revendications 2 à 12, les moyens à articulation étant agencés pour permettre à l'élément de bras (1) et à l'élément de maintien (2) de s'ouvrir suivant un angle d'au moins 90 degrés.

14. Bras de serrage selon l'une quelconque des revendications 1 à 13, le profil externe de l'extrémité distale du bras de serrage étant tel qu'aucun évidement n'est exposé à la surface extérieure lorsque l'élément de bras (1) et l'élément de maintien (2) sont en train d'agripper un câble, lors de l'utilisation.

15. Bras de serrage selon l'une quelconque des revendications précédentes, l'extrémité distale du bras de serrage ayant un profil externe sensiblement circulaire.

16. Bras de serrage selon l'une quelconque des revendications précédentes, le profil externe de l'extrémité distale du bras de serrage formant une courbe lisse qui se prolonge sur au moins 45 degrés de part et d'autre de l'axe central du bras de serrage, par rapport au centre du conducteur serré, lors de l'utilisation.

17. Bras de serrage selon l'une quelconque des revendications précédentes, le profil externe de l'extrémité distale du bras de serrage étant suffisamment exempt de discontinuités à arêtes vives pour empêcher une décharge corona à une tension de 750 kV phase-phase, lors de l'utilisation.

18. Bras de serrage selon l'une quelconque des revendications précédentes, le profil en coupe du bras de serrage comportant une ou plusieurs portions en découpe (7, 8).

19. Bras de serrage selon la revendication 18, la portion d'extrémité agrandie (4) englobant une portion en découpe (7).

20. Ensemble bras de serrage comportant un bras de serrage (10) selon l'une quelconque des revendications précédentes, et un ou plusieurs garnissages de serrage extrudés (5) pour entourer et agripper un câble, lors de l'utilisation.

21. Amortisseur d'espacement pour assurer la séparation de multiples conducteurs de transmission, comprenant un cadre (70 ; 80) sur lequel est montée une pluralité de bras de serrage (10) selon l'une quelconque des revendications 1 à 20, la portion d'extrémité agrandie (4) de chaque bras de serrage étant reçue en solidarisation d'amortissement avec un évidement coopérant (72 ; 82) dans le cadre, cas dans lequel au moins les évidements coopérants ménagés dans le cadre sont formés par extrusion ou par une autre technique de profilage.

22. Amortisseur d'espacement selon la revendication 21, le cadre (80) comprenant une pluralité de logements modulaires de bras de serrage (84) et un cadre d'espacement (86),
chaque logement modulaire de bras de serrage présentant une coupe sensiblement uniforme et étant formé par extrusion ou par une autre technique de profilage,
le profil en coupe de chaque logement étant tel qu'il définit l'un des évidements (82) destinés à recevoir et à assujettir l'un des bras de serrage (10), et des moyens d'attache,
les logements de bras de serrage étant attachés au cadre d'espacement par les moyens d'attache afin de positionner les logements de bras de serrage l'un par rapport à l'autre.

23. Amortisseur d'espacement selon la revendication 21 ou 22, chaque bras de serrage (10) étant reçu dans l'évidement coopérant (72 ; 82), et en étant séparé, au niveau du cadre (70 ; 80) grâce à une pluralité d'éléments d'espacement extrudés.
